# EUROPEAN PATENT APPLICATION

(11) **EP 2 247 098 A1**
(43) Date of publication of application: **03.11.2010**
(21) Application number: 10161564.9
(22) Date of filing: 30.04.2010
(51) Int. Cl.: H04N 5/235, H04N 5/243, B60R 1/00

(54) **Vehicle monitoring controlling unit and vehicle monitoring system**

(30) Priority: 30.04.2009 JP 2009110452
(71) Applicant: Koito Manufacturing Co., Ltd., Tokyo 108-8711 (JP)
(72) Inventor: Endo, Osamu, Shizuoka-shi, Shizuoka (JP); Koizumi, Hiroya, Shizuoka-shi, Shizuoka (JP); Tatara, Naoki, Shizuoka-shi, Shizuoka (JP)
(74) Representative: Intes, Didier Gérard André

(57) **Abstract**

A light source (110) is configured to emit a light to irradiate the light onto a certain range. An imaging device (120) is configured to pick up an image of a subject that is illuminated by the light emitted from the light source (110). A signal processing unit (2) is configured to apply a signal processing of an automatic gain control to an imaging signal of the pick-up image obtained from the imaging device (120). A monitor device (3) is configured to display an image obtained from the imaging signal that is subjected to the signal processing by the signal processing unit (2). A filter (130) is provided on either an irradiating path of the light that is emitted from the light source (110) or an incident path of the light that is received by the imaging device (120), and has an optical transmission characteristic whose transmittance of light is set differently with respect to each of areas in the certain range.

## Description

### TECHNICAL FIELD

The present disclosure relates to a vehicle monitoring controlling unit and a vehicle monitoring system for picking up an image of surroundings of a driver's own vehicle and checking subjects such as an obstruction, etc. based on the picked-up image. More particularly, the present disclosure relates to a vehicle monitoring controlling unit and a vehicle monitoring system that enables a driver to check the subject without fail.

### RELATED ART

The vehicle monitoring system monitors the subject such as the obstruction located around the driver's own vehicle, especially the obstruction located from the sideward area to the backward area, etc., to secure the safety running of the driver's own vehicle. As the vehicle monitoring system, the system for monitoring the subject by irradiating the infrared light onto surrounding areas of the driver's own vehicle from the illumination lamp, then picking up the image by utilizing the infrared light reflected from the subject, and then displaying the picked-up image on the monitor device has been proposed. For example, in Patent Literature 1, the back monitor lamp is provided integrally to the license plate lamp that illuminates the license plate of the vehicle such that the backward area of the driver's own vehicle can be illuminated by the infrared light emitted from the back monitor lamp. Also, the back monitor camera is provided as the imaging unit in vicinity of the license plate such that the image of the backward area being illuminated by infrared light can be picked up by the imaging unit. When the image being picked up by the back monitor camera is displayed on the monitor device that is provided to the driver's seat, the driver can check the subject being located in the backward area and can secure the safety running of the driver's own vehicle.

[Patent Literature 1] JP-A-2007-145048

In this type of monitoring system, while the picked-up image is obtained by applying the signal processing to the imaging signals that are obtained by the imaging unit, the so-called AGC (Automatic Gain Control) is applied to the imaging signals. Normally this AGC denotes the process that a signal level of the imaging signal is decreased or increased in such a manner that the maximum signal level out of the imaging signals is kept at a predetermined signal level. Accordingly, the image to be displayed on the monitor device has a predetermined brightness, and thus the driver can easily check the subject. However, when the signal level of the imaging signals is decreased by the AGC in such a situation that the image whose signal level is very high is present in the picked-up images, the signal levels of the images of other subjects are also decreased in proportion to the above decrease. Hence, the signal levels are decreased to the signal level that is lower than the black level of display in the monitor device. As a result, in some cases the images of other subjects are not displayed on the monitor device, so that the driver cannot check the concerned subj ect.

For example, when one vehicle is located in close vicinity of the driver's own vehicle (referred to as a "closest vehicle" hereinafter), a part of infrared light that is emitted from the monitor lamp is reflected by this closest vehicle. In this event, since the closest vehicle is positioned at a short distance from the driver's own vehicle, the reflected light constitutes a strong reflected light. Therefore, when the image of the area containing this closest vehicle is picked up by the imaging device, the very high signal level out of the resultant imaging signals is generated due to the closest vehicle. As a result, when the signal level of the closest vehicle is decreased to a predetermined level by applying the AGC to the imaging signals, an extent of level decrease is enhanced significantly. Accordingly, the signal level of the picked-up image of another vehicle that is running just behind the driver's own vehicle" (referred to as a "following vehicle" hereinafter) is decreased significantly. The following vehicle is located at a long distance from the driver's own vehicle. Therefore, the reflected light of the infrared light being emitted from the monitor lamp is weak, and thus the signal level of the imaging signals of the picked-up image is low. Hence, when an extent of level decrease of the imaging signals is significantly enhanced by applying the AGC to the imaging signals, the signal level of the image of the following vehicle is decreased to the level that is lower than a displayable signal level of the monitor device. As a result, the image of the following vehicle cannot be displayed on the monitor device, and the driver cannot secure the safety running of the driver's own vehicle by monitoring the following vehicle on the monitor device. This situation is similarly true of the case where a standstill subject that reflects the infrared light at a high reflectivity is located in close vicinity of the driver's own vehicle. This standstill subject makes it difficult for the driver to monitor the subjects that are located behind or beside the driver's own vehicle.

### SUMMARY

Exemplary embodiments of the present invention provide a vehicle monitoring controlling unit and a vehicle monitoring system that enables a driver to secure a safety running of a driver's own vehicle by monitoring subjects such as a following vehicle that is running just behind the driver's own vehicle, an obstruction, etc. without fail even when an object such as a vehicle, or the like is located in close vicinity of the driver's own vehicle.

A vehicle monitoring controlling unit according to an exemplary embodiment of the invention comprises:
a signal processing unit configured to apply a signal processing of an automatic gain control to an imaging signal of a pick-up image obtained from an imaging device and to cause a monitor device to display an image obtained from the imaging signal that is subjected to the signal processing by the signal processing unit,
wherein the signal processing unit is configured to output the imaging signal which is adjusted with respect to each of areas in an imaging area to the monitor device.

A vehicle monitoring system according to a first exemplary embodiment of the invention comprises:
a light source configured to emit a light to irradiate the light onto a certain range;
an imaging device configured to pick up an image of a subject that is illuminated by the light emitted from the light source;
the vehicle monitoring controlling unit;
a monitor device configured to display the image obtained from the imaging signal that is subjected to the signal processing by the signal processing unit; and
a filter provided on either an irradiating path of the light that is emitted from the light source or an incident path of the light that is received by the imaging device, and having an optical transmission characteristic whose transmittance of light is set differently with respect to each of areas in the certain range.

The optical transmission characteristic of the filter may include a characteristic whose transmittance of light with respect to each of the areas is changed successively or a characteristic whose transmittance of light with respect to each of the areas is changed stepwise.

A vehicle monitoring system according to a second exemplary embodiment of the invention comprises:
a light source configured to emit a light to irradiate the light onto a certain range;
an imaging device configured to pick up an image of a subject that is illuminated by the light emitted from the light source;
the vehicle monitoring controlling unit; and
a monitor device configured to display the image obtained from the imaging signal that is subjected to the signal processing by the signal processing unit;
wherein the light source is configured to irradiate the light onto different areas in the certain range with a different luminous intensity respectively.

A vehicle monitoring system according to a third exemplary embodiment of the invention comprises:
a light source configured to emit a light to irradiate the light onto a certain range;
an imaging device configured to pick up an image of a subject that is illuminated by the light emitted from the light source;
the vehicle monitoring controlling unit; and
a monitor device configured to display the image obtained from the imaging signal that is subjected to the signal processing by the signal processing unit;
wherein the signal processing unit is configured to partition the imaging area of the imaging device into a plurality of the areas and apply independently the automatic gain control with respect to the imaging signal for each of the areas.

In the first to third exemplary embodiments of the invention, the light source may be an infrared light source that emits an infrared light, and the imaging device may have a semiconductor infrared imaging device that picks up the image by receiving the infrared light.

According to the present invention, even when the strong reflected light is generated by the vehicle that has closed in behind the driver's own car, the obstruction, etc. in the imaging area in such a situation that the subject is illuminated by the light emitted from the light source to pick up the image, the proper AGC can be applied without the influence of this strong reflected light. Therefore, the picked-up image of not only another vehicle and another obstruction but also other vehicles and other obstructions can be displayed on the monitor device as the proper images. As a result, the driver can ensure the safety running of the vehicle by monitoring other vehicles and other obstructions without fail.

Other features and advantages may be apparent from the following detailed description, the accompanying drawings and the claims.

### BRIEF DESCRIPTION OF THE DRAWINGS

FIG.1 is a schematic configurative view showing a car having a monitoring system according to Embodiment 1 of the present invention;
FIG.2 is a schematic perspective view showing a right-side rear combination lamp;
FIG.3 is a conceptual configurative view showing a monitoring module;
FIGS.4A, 4B and 4C are views showing transmission limiting filter characteristic, quantity of light emitted and quantity of light irradiated;
FIG.5 is a circuit configuration view of a signal processing unit;
FIGS.6A, 6B and 6C are views showing a positional relationship of the next vehicle and the following vehicle and monitor images;
FIGS.7A, 7B and 7C are views showing an imaging signal and AGC characteristics;
FIG.8 is a conceptual configurative view showing a monitoring module according to Embodiment 2 of the present invention;
FIGS.9A, 9B and 9C are views showing transmission limiting filter characteristic, an imaging signal and AGC characteristics according to Embodiment 2 of the present invention;
FIGS.10A and 10B are conceptual configurative views showing monitoring modules according to Embodiment 3 of the present invention;
FIG.11 is a view showing illumination areas according to Embodiment 3 of the present invention;
FIGS.12A, 12B and 12C are views showing quantity of irradiated light, an imaging signal and AGC characteristics according to Embodiment 3 of the present invention; and
FIGS.13A, 13B, 13C and 13D are views showing an imaging area of an imaging device, an imaging signal and AGC characteristics according to Embodiment 4 of the present invention.

### DETAILED DESCRIPTION

### (Embodiment 1)

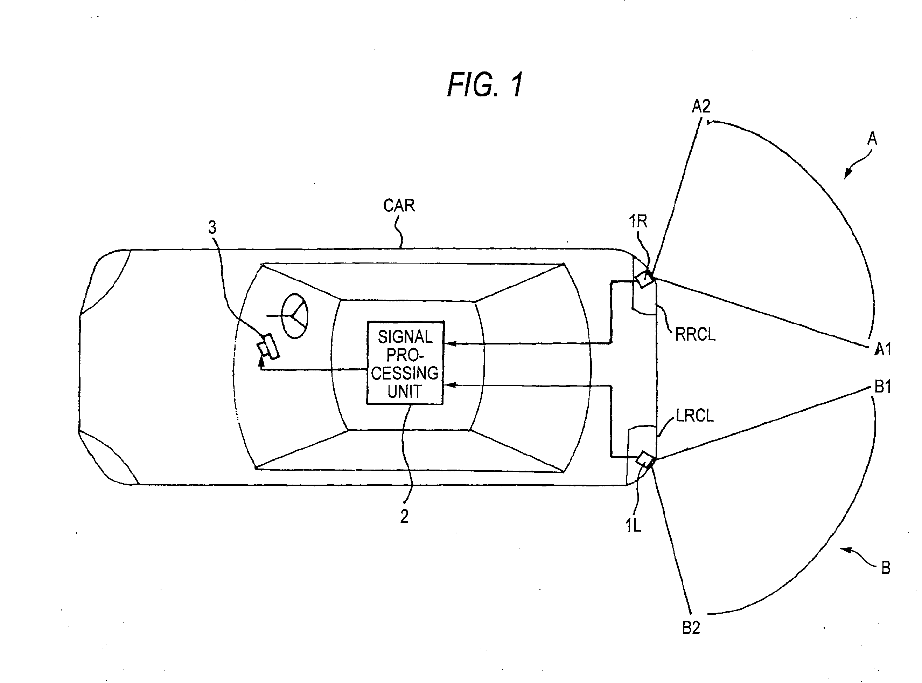

Next, embodiments of the present invention will be explained with reference to the drawings hereinafter. FIG.1 is a schematic configurative view of Embodiment 1 in which the present invention is constructed as a monitoring system that monitors the sideward area to the backward area of a car CAR. Monitoring modules 1R, 1L are integrally built in the insides of right and left rear lamps, i.e., right-side and left-side rear combination lamps RRCL, LRCL herein, details of which will be described later, of a car respectively. These rightward and leftward monitoring modules 1R, 1L are constructed by an infrared light source and an imaging device respectively, as described later. The monitoring module 1R provided to the right-side rear combination lamp RRCL is constructed such that, as shown in FIG. 1, an area A extended from a right sideward area to a backward area of a driver's own car CAR is illuminated by the infrared light that is emitted and irradiated from the infrared light source and then the image of this illuminated area A is picked up by the imaging device. Also, the monitoring module 1L provided to the left-side rear combination lamp LRCL is constructed such that an area B extended from a left sideward area to a backward area of the driver's own car CAR is illuminated by the infrared light and then the image of this illuminated area B is picked up by the imaging device. Both monitoring modules 1R, 1L are connected to a signal processing unit 2, and the signal processing is applied to the imaging signals that are obtained by picking up the image of the areas by the imaging device. A monitor device 3 provided to the driver's seat of the driver's own car CAR, for example, is connected to this signal processing unit 2, and the image obtained from the imaging signals that are subjected to the signal processing is displayed on the monitor device 3. When the driver views the image displayed on the monitor device 3 to check the subjects, such a driver is enabled to monitor the area extended over the backward area to the sideward area of the driver's own car CAR.

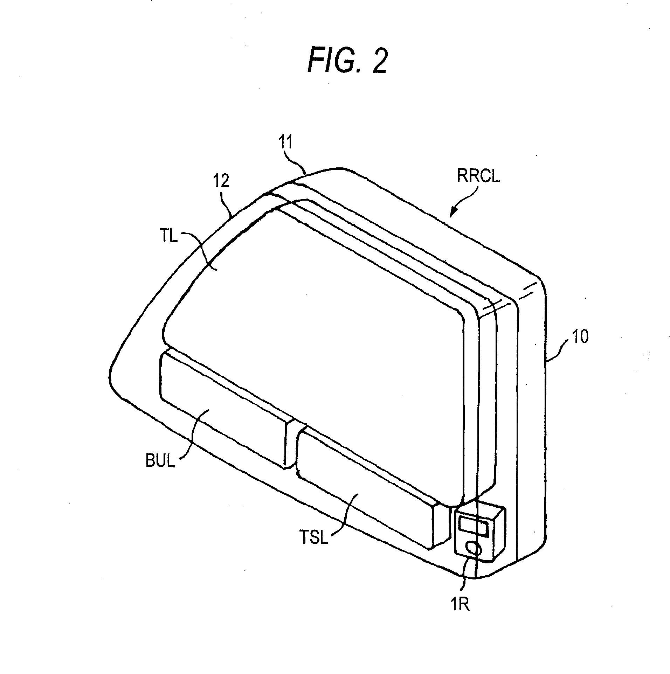

FIG.2 is a schematic perspective view of the right-side rear combination lamp RRCL, which is provided to the right rear portion of the car, out of the right-side and left-side rear combination lamps RRCL, LRCL. A lamp housing 10 is constructed by a lamp body 11 and a front cover 12, and also a tail lamp TL also acting as a stop lamp, a backup lamp BUL, and a turn signal lamp TSL are built in the lamp housing 10. Also, the rightward monitoring module 1R is built in the right-side area in the lamp housing 10, when viewed from the front side, such that this module 1R monitor the area A extended from the right sideward area to the backward area of the driver's own car CAR shown in FIG1.

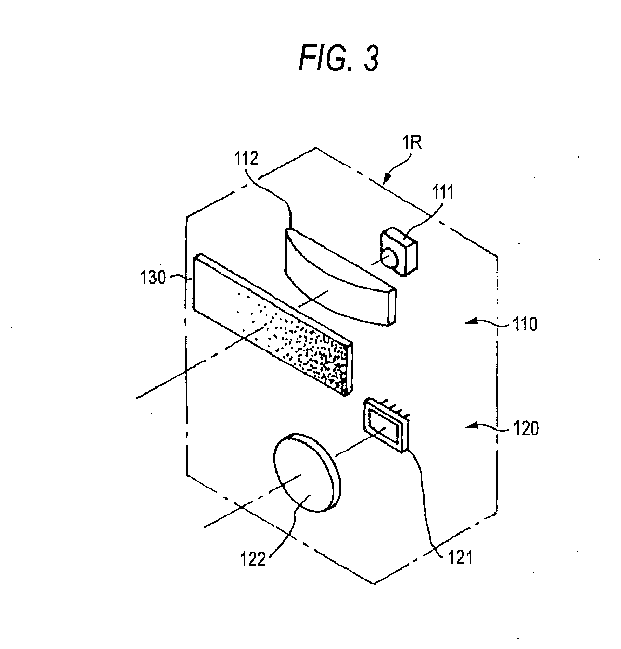

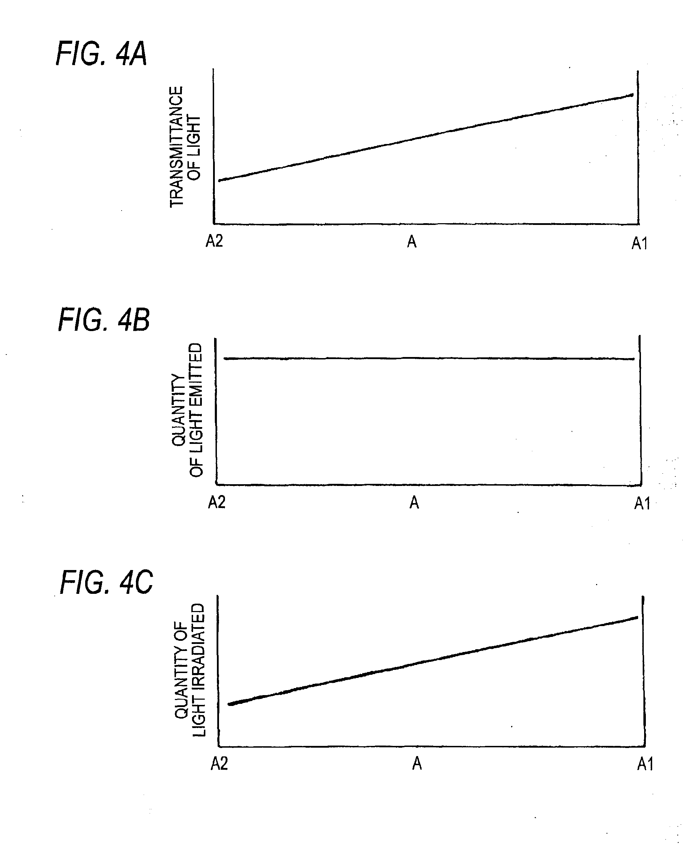

The rightward monitoring module 1R whose conceptual configuration is shown in FIG.3 is equipped with an infrared light source 110 for emitting the infrared light, and an imaging device 120 for picking up an image of the subject by receiving the infrared light that is irradiated from the infrared light source 110 and reflected from the subject. The infrared light source 110 has an infrared LED (Light Emitting Diode) 111 for emitting the infrared light, and a lens 112 for distributing the infrared light that is emitted from the infrared LED 111 toward the area extended from the right sideward area to the backward area of the driver's own car. Also, in Embodiment 1, a transmission limiting filter 130 for controlling a transmittance of the infrared light is provided on the front side of the infrared light source 110. A gradient of the transmittance of this transmission limiting filter 130 is set such that the transmittance of the infrared light is lowered gradually from a backward end A1 to a rightward end A2 of the area A onto which the infrared light is irradiated as shown in FIG.1. That is, as shown in FIG.4A, the transmittance of the transmission limiting filter 130 has the right-upward inclined characteristic, wherein an abscissa denotes an infrared light irradiated area A extended from the backward end A1 to the rightward end A2 and an ordinate denotes a transmittance. Accordingly, as shown in FIG.4B, when a quantity of light of the infrared light is emitted substantially uniformly in the area A from the infrared LED 111, a quantity of light of the infrared light that is transmitted through the transmission limiting filter 130 and irradiated onto the area A has the right-upward inclined characteristic in pursuant to the transmittance of the transmission limiting filter 130, as shown in FIG.4C. In other words, a quantity of light of the infrared light being irradiated rightward becomes smaller than a quantity of light of the infrared light being irradiated backward.

In FIG.3, the imaging device 120 has an imaging element 121 such as CCD, C-MOS, or the like for receiving the infrared light and picking up the image, and an image forming lens 122 for forming optically the image of the subject on the imaging element 121. The imaging device 120 is constructed as a camera whose angle of view enables this camera to pick up the image of the area A onto which the infrared light emitted from the infrared light source 110 is irradiated. The imaging device 120 has the same imaging sensitivity over the full range in the imaging area, and can pick up the image of the subject as the imaging signals at the same signal level when the subject has the same brightness.

The above explanation is given to the right-side rear combination lamp RRCL and the rightward monitoring module 1R built in this combination lamp. In the left-side rear combination lamp LRCL, the tail lamp, the stop lamp, and the turn signal lamp are arranged symmetrically with those of the right-side combination lamp RRCL in FIG.2 respectively. The leftward monitoring module 1 L is built in the left-side area in the lamp housing 10, and is constructed to pick up the image of the area B extended from the left sideward area to the backward area of the driver's own car CAR, as shown in FIG. 1. Remaining configurations of the combination lamp LRCL is similar to those of the combination lamp RRCL. Also, the transmittance characteristic of the transmission limiting filter 130 in the leftward monitoring module 1 L is set symmetrically with that of the transmission limiting filter 130 in the rightward monitoring module 1 R. A quantity of irradiated light of the infrared light that is emitted from the infrared light source, transmitted through the transmission limiting filter, and irradiated onto the area is set such that a quantity of light of the infrared light that is irradiated onto a leftward end B2 of the driver's own car becomes smaller than a quantity of light of the infrared light that is irradiated onto a backward end B1.

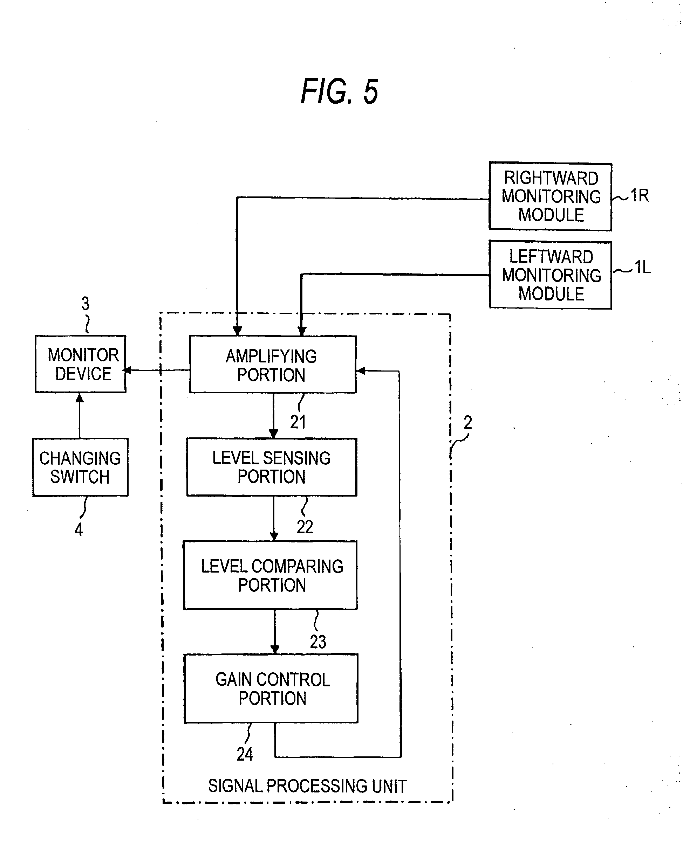

As shown in FIG.1, the rightward and leftward monitoring modules 1R, 1 L are connected to the signal processing unit 2. As shown in FIG.5, the signal processing unit 2 includes an amplifying portion 21 for amplifying the imaging signal picked up by the imaging element 121 of the imaging devices 120 in the rightward and leftward monitoring modules 1R, 1L and outputting the amplified imaging signal to the monitor device 3, a level sensing portion 22 for sensing a maximum level of the imaging signal being input into the amplifying portion 21, a level comparing portion 23 for comparing the sensed maximum level with a reference level to detect a difference between them, and a gain controlling portion 24 for controlling an amplification factor, i.e., a gain of the amplifying portion 21 based on a level difference sensed by the level comparing portion 23. The amplifying portion 21, the level sensing portion 22, the level comparing portion 23, and the gain controlling portion 24 constitutes the so-called AGC circuit. Accordingly, a gain of the amplifying portion 21 is automatically changed/controlled based on a signal level of the imaging signal. As a result, the AGC is applied such that a minimum signal level and a maximum signal level stay within a predetermined range of signal level. The imaging signal amplified by the amplifying portion 21 using AGC in this manner is output to the monitor device 3, and the picked-up image is displayed on the monitor device 3. Here, the images picked up by the rightward and leftward monitoring modules 1R, 1L are switched by a changing switch 4 and are displayed on the monitor device 3.

In Embodiment 1, when the driver causes the monitoring system to operate, the rightward and leftward monitoring modules 1R, 1L that are built in the right-side and left-side rear combination lamps RRCL, LRCL start the operation respectively, and display the picked-up images on the monitor device 3 provided on the front side of the driver's seat. More particularly, in the rightward and leftward monitoring modules 1R, 1L, the infrared light sources 110 emit the infrared light to the area being extended from the right sideward area to the backward area and the area being extended from the left sideward area to the backward area of the driver's own car respectively. Then, the imaging device 120 picks up the image of the area illuminated by the infrared light, and also picks up the image of the subject that exists in this area. The signal processing is applied the imaging signals of the picked-up image in the signal processing unit 2, and the picked-up image is displayed on the monitor device 3. The driver can display selectively the right-side and left-side picked-up image on the monitor device 3 by operating the changing switch 4. At this time, a distribution of a quantity of light of the irradiated infrared light is controlled by the transmission limiting filter 130 provided in front of the infrared light source 110. As described above, the rightward monitoring module 1R is controlled such that, as shown in FIG.4C, a quantity of light is lowered gradually from the backward end A1 to the rightward end A2 of the driver's own car in the area A. Although the illustration is omitted, the leftward monitoring module 1 L is controlled symmetrically with the above such that a quantity of light is lowered gradually from the backward end B1 to the leftward end B2 of the driver's own car in the area B.

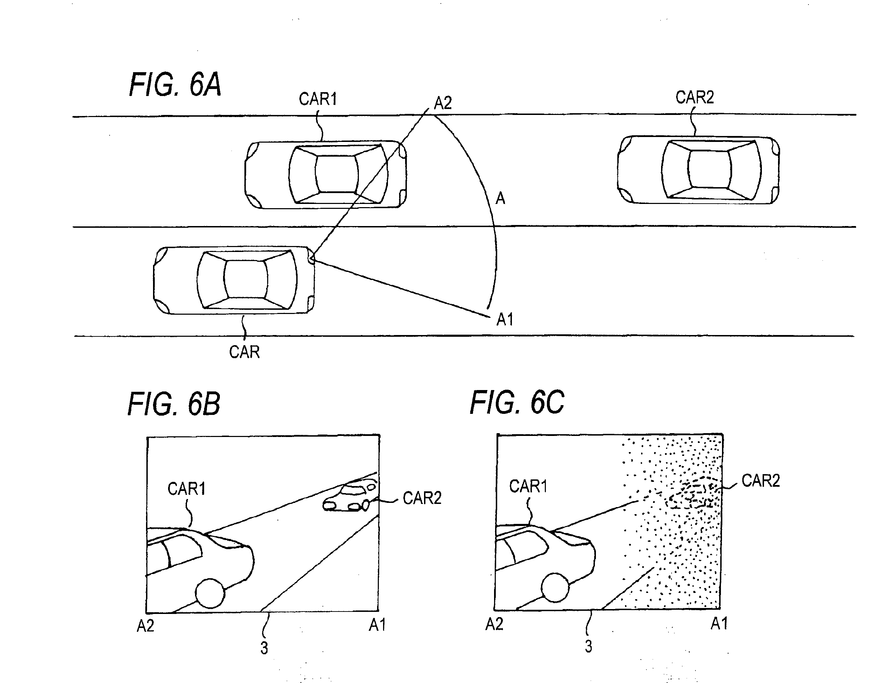

In this monitoring system, for example, the rightward monitoring module 1 R will be explained hereunder. As shown in a plan view of FIG.6A, it is assumed that the driver's own car CAR is running leftward in FIG.6A, a first car (next vehicle) CAR1 is running in the right lane to close in right behind the driver's own car, and a second car (following vehicle) CAR2 is running behind the first car CAR1 in the right lane. Here, when the rightward monitoring module 1R of the monitoring system in the driver's own car CAR picks up the image of this situation, the image shown in FIG.6B is displayed on the monitor device 3. However, when the transmission limiting filter 130 is not provided in front of the infrared light source 110 and also, as shown in FIG.4B, the infrared light is distributed uniformly to the area extended from the backward end A1 to the rightward end A2 by the infrared light source 110, the strong reflected light is generated from the next vehicle CAR1 because the next vehicle CAR1 is located at a short distance from the infrared light source 110. Thus, a signal level of the imaging signals that pick up the image of the next vehicle CAR1 becomes extremely high. On the contrary, the weak reflected light is generated from the following vehicle CAR2 because the following vehicle CAR2 is located at a long distance from the infrared light source 110. Thus, a signal level of the imaging signals that pick up the image of the following vehicle CAR2 becomes low.

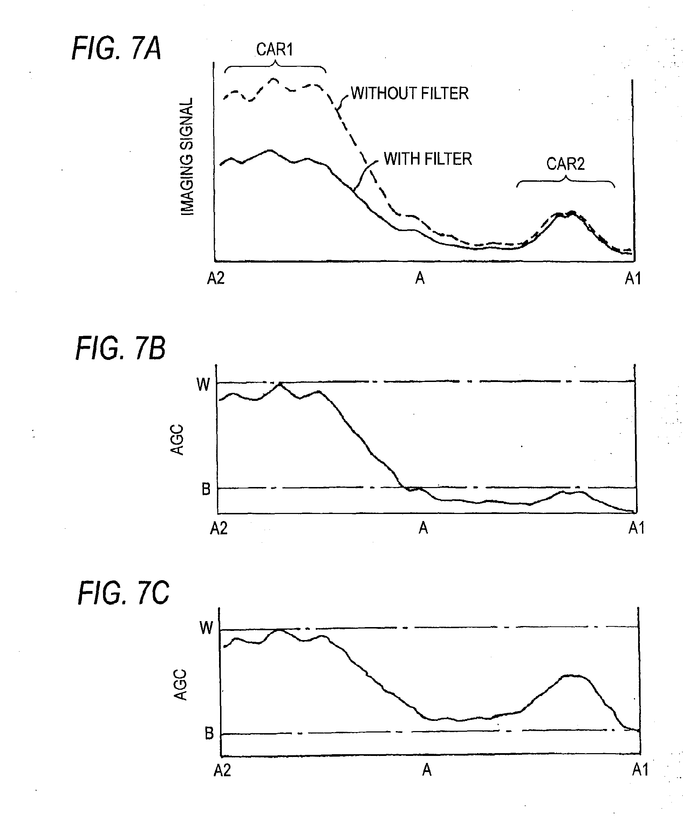

In other words, with regard to the imaging signal that is used to pick up the image in the imaging device 120 at this time, as indicated with a broken line in FIG.7A, a level of the imaging signal of the following vehicle CAR2 is low over the backward end A1 to the rightward end A2, and a level of the imaging signal of the next vehicle CAR1 is extremely high. Therefore, when the AGC is applied to the imaging signal by the signal processing unit 2, an extent of level decrease of the imaging signals is significantly enhanced because the signal level of the next vehicle CAR1 at the maximum level is decreased to a predetermined level (white level W), as shown in FIG.7B, and the signal level of the following vehicle CAR2 is significantly decreased in proportion to the above. Thus, the signal level of the following vehicle CAR2 is decreased close to a black level B of the monitor device. As a result, as shown in FIG.6C, the image of the following vehicle CAR2 fades into the background, and it is hard for the driver to discriminate the following vehicle CAR2 from the image displayed on the monitor device.

However, in Embodiment 1, the infrared light is irradiated from the infrared light source 110 such that, as shown in FIG.4C, a quantity of irradiated light is lowered gradually from the backward end Alto the rightward end A2 of the driver's own car. Therefore, the strong reflected light from the next vehicle CAR1 is decreased and, as indicated with a solid line in FIG.7A, the signal level of the imaging signal that picks up the image of the next vehicle CAR1 is decreased. Hence, when the signal level of the next vehicle CAR1 that shows the maximum level is controlled to the predetermined level W by applying the AGC to the imaging signal, an extent of level decreased of the imaging signal is decreased. Accordingly, as shown in FIG.7C, the signal level of the following vehicle CAR2 is higher than the black level B of the monitor device 3. As a result, as shown in FIG.6B, not only the next vehicle CAR1 but also the following vehicle CAR2 is clearly displayed on the monitor device 3, and the image from which the driver can check the next vehicle is displayed.

The above explanation is similarly true of the leftward monitoring module 1L that is provided to the left-side rear combination lamp LRCL. Even when the next vehicle exists on the left side of the driver's own car, a quantity of light that is irradiated onto the next vehicle from the infrared light source 110 is decreased by the transmission limiting filter 130, and therefore a quantity of light that is reflected from the next vehicle is also decreased. Even when the AGC is applied to the imaging signal being output from the imaging device 120 by the signal processing unit 2, a decrease of the signal level of the imaging signal of the following vehicle is suppressed, and the driver can check the following vehicle by the monitor device 3.

In the above explanation, the next vehicle and the following vehicle are described as the contrastive subject. In this event, the above explanation is similarly true of the case where the contrastive subject located next to the driver's own car is the obstruction or the case where the contrastive subject located behind the driver's own car is the obstruction or the foot passenger. Therefore, even though another car or another obstruction is located closely next to the driver's own car, a quantity of light of the infrared light that is reflected from another car or another obstruction is decreased. As a result, even when the AGC is applied by the signal processing unit and thus the image is displayed at a proper brightness on the monitor device, the driver can check the following vehicle, the obstruction or the foot passenger located behind the driver's own car without fail by the monitor device, and can ensure the safety running. Of course, when another car or another obstruction is located just behind the driver's own car in the next lane, the driver can check the following vehicle, the obstruction, or the foot passenger without fail to have no influence of the reflection of the infrared light from these subjects. Such explanation is not limited to the case where the following vehicle, the obstruction, or the foot passenger located just behind the driver's own car in the same lane should be checked. Such explanation is similarly applied to the case where the following vehicle, the obstruction, or the foot passenger located just behind the driver's own car in the adjacent lane should be checked.

### (Embodiment 2)

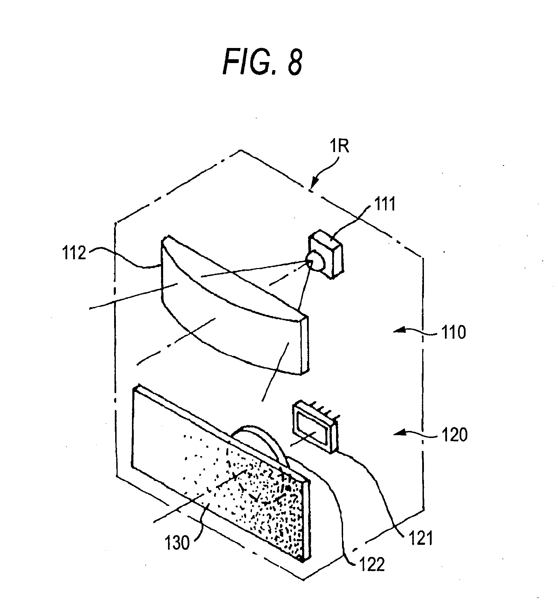

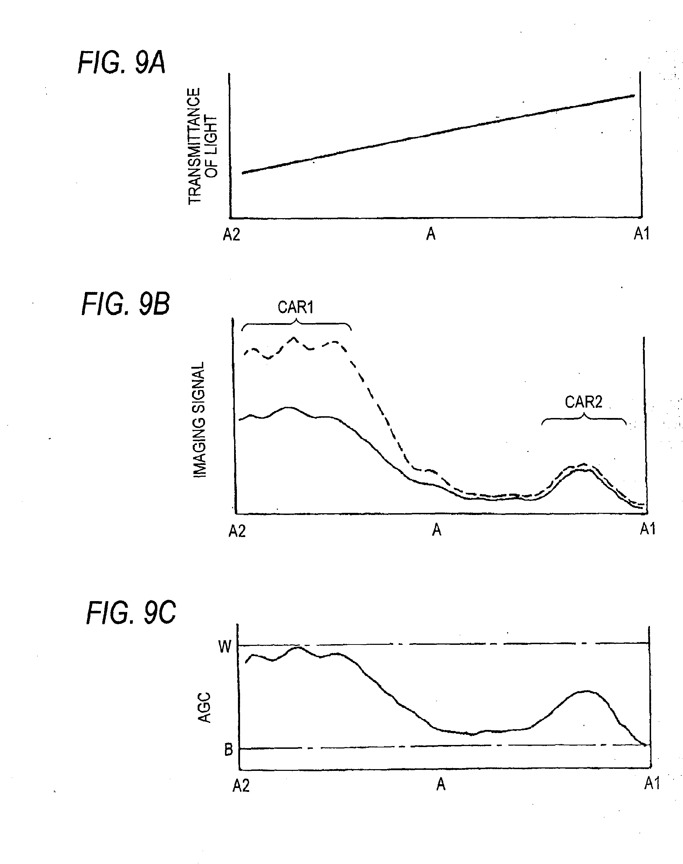

In Embodiment 1, the transmission limiting filter 130 is provided in front of the infrared light source 110 such that a quantity of infrared light irradiated from the infrared light source 110 is lowered gradually from the backward end to the sideward end of the driver's own car. In Embodiment 2, the similar transmission limiting filter is provided in front of the imaging device. FIG.8 is a conceptual configurative view of the rightward monitoring module 1 R of Embodiment 2 built in the right-side rear combination lamp RRCL, like Embodiment 1. The transmission limiting filter 130 is not provided in front of the infrared light source 110 constituting the infrared LED 111 and the imaging device 120. Alternately, as shown in FIG.9A, the transmission limiting filter (similar to the transmission limiting filter in Embodiment 1) 130 whose transmittance of the infrared light is lowered gradually from the backward end A1 to the rightward end A2 is provided in front of the imaging device 120 and the image forming lens 122.

Because such transmission limiting filter 130 is provided to the imaging device 120, the signal level of the imaging signal of the next vehicle CAR1 picked up by the imaging device 120 can be decreased, as indicated with a solid line in FIG.9B, even in such a situation that the next vehicle CAR1 is located on the right side of the driver's own car CAR, as shown in FIG.6A, and thus the infrared light emitted from the infrared light source 110 is strongly reflected by the next vehicle CAR1 and picked up by the imaging device 120. In contrast, the signal level of the imaging signal of the following vehicle CAR2 is hardly decreased. In this connection, a broken line in FIG.9B indicates the signal level of the imaging signal in a state that the transmission limiting filter 130 is not provided. Therefore, like Embodiment 1, even when the signal level of the next vehicle that exhibits the maximum level is decreased to the predetermined level W by applying the AGC to the detected imaging signal in the signal processing unit 2, such a situation is suppressed that the signal level of the following vehicle CAR2 is significantly decreased, as shown in FIG.9C. Therefore, the signal level is still kept higher than the black level B of the monitor device 3. As a result, as shown in FIG.6B, the driver can check the image of the following vehicle CAR2 from the image on the monitor device 3.

In Embodiments 1, 2, the transmission limiting filter 130 is constructed such that the transmittance is changed continuously from the backward end to the sideward end. In this case, it is needless to say that the transmittance may be changed stepwise such that a quantity of irradiated light is changed stepwise or a quantity of received light is changed stepwise.

### (Embodiment 3)

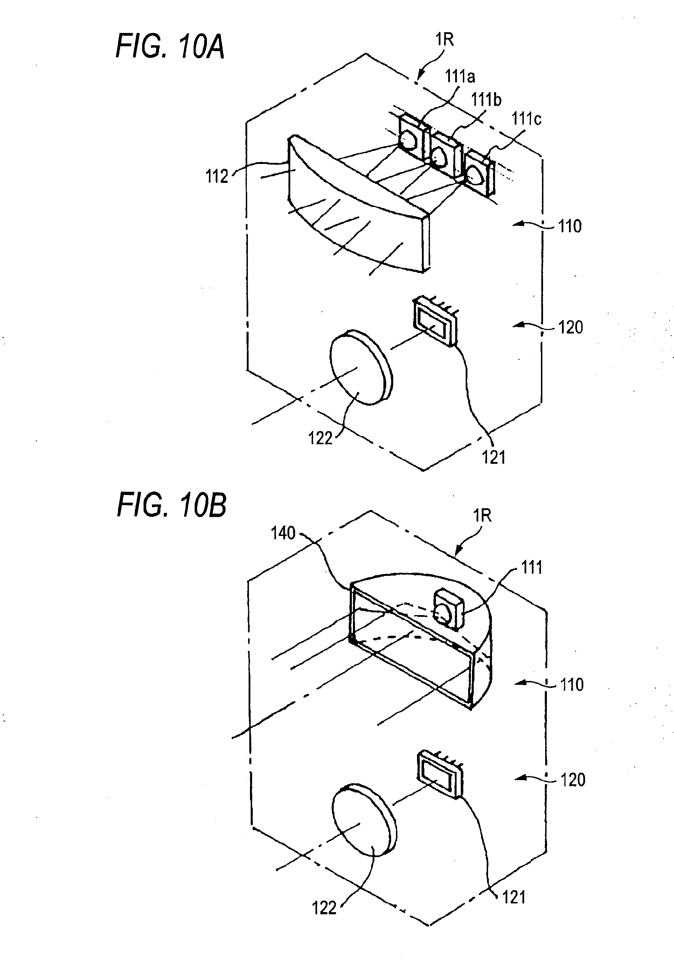

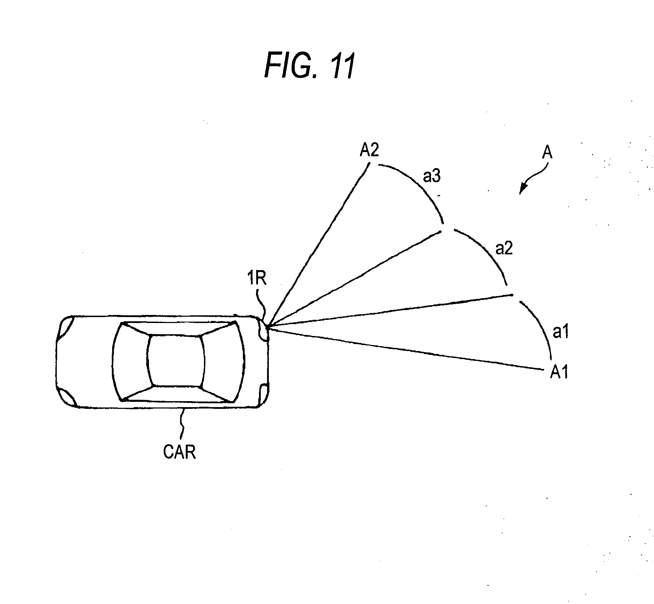

In Embodiment 3, instead of the provision of the transmission limiting filter, a plurality of infrared LEDs are provided to respective infrared light sources 110 in the rightward and leftward monitoring modules 1R, 1L. As shown in a conceptual configuration of the rightward monitoring module 1R in FIG.10A, three infrared LEDs 111a to 111c being aligned in the lateral direction are provided to the infrared light source 110 herein, and the emitting directions of the infrared lights from the infrared LEDs 111a to 111c are differentiated to irradiate the infrared light to different areas respectively. As shown in FIG.11, the inner infrared LED 111a is constructed to irradiate the infrared light to a back area a1, the center infrared LED 111b is constructed to irradiate the infrared light to a slightly rightward area a2, and the outer infrared LED 111c is constructed to irradiate the infrared light to a rightward area a3. In order to implement this configuration, an optical design is applied to the infrared light source 110 of the rightward monitoring module 1R such that the lens 112 distributes the infrared lights emitted from the infrared LEDs 111a to 111c to the areas a1 to a3 by means of the refraction respectively.

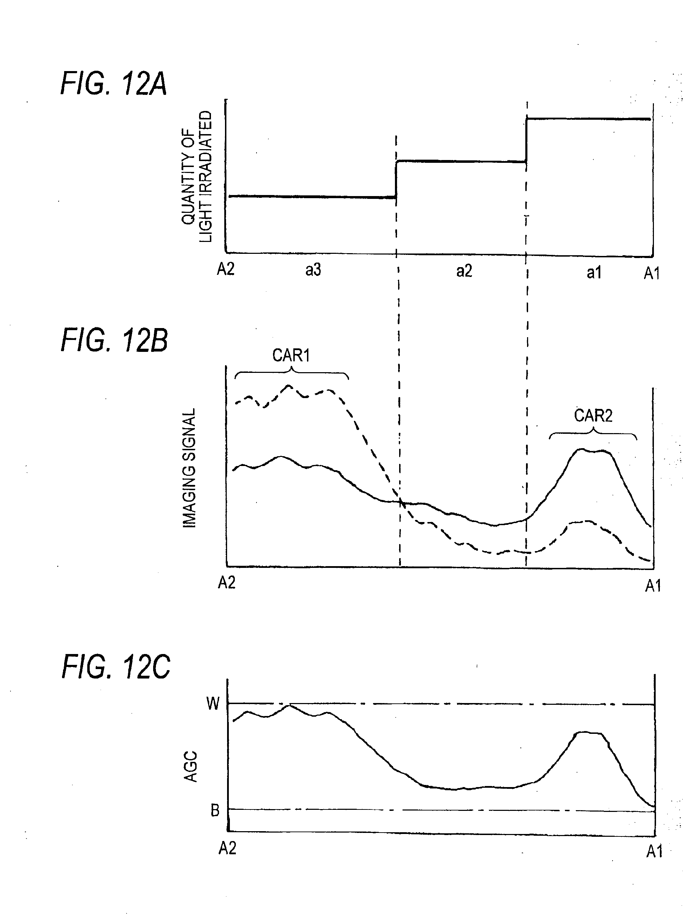

Also, as shown in FIG.12A, in the infrared light source 110, a quantity of irradiated light of the inner infrared LED 111a for illuminating the back area a1 is set to the largest quantity of light, a quantity of irradiated light of the center infrared LED 111b is set to the smaller quantity of light, and a quantity of irradiated light of the outer infrared LED 111c is set to the smallest quantity of light. A configuration of the imaging device is similar to that in Embodiment 1.

In Embodiment 3, as shown in FIG.12A, a quantity of irradiated light is lowered sequentially in three steps to the back area a1, the center area a2, and the rightward area a3 of the driver's own car. Therefore, even when the next vehicle CAR1 shown in FIG.6A is located in the rightward area a3, a quantity of irradiated light of the infrared light irradiated onto the next vehicle CAR1 is small, and therefore the signal level of the imaging signal of the next vehicle CAR1 picked up by the imaging device 120 is suppressed, as indicated with a solid line in FIG. 12B. In contrast, a quantity of irradiated light of the infrared light irradiated onto the following vehicle CAR2 that is located in the back area a1, and therefore the signal level of the imaging signal of the following vehicle CAR2 picked up by the imaging device 120 is relatively large. Additionally, a broken line in FIG.12B indicates the imaging signal when the illumination is given by a uniform quantity of irradiated light.

Accordingly, even when the AGC is applied to the imaging signal, which is picked up by the imaging device 120 and indicated with a solid line, in the signal processing unit 2 such that the signal level of the next vehicle CAR1 that exhibits the maximum level is decreased to the predetermined level W, such a situation is suppressed that the signal level of the following vehicle CAR2 is significantly decreased, like Embodiments 1, 2. Therefore, the signal level is still kept higher than the black level B of the monitor device 3. As a result, the driver can check the image of the following vehicle CAR2 based on the image on the monitor device 3.

In Embodiment 3, three infrared LEDs 111a to 111c can be controlled independently. Therefore, the monitoring module can be constructed, for example, such that a quantity of emitted light is changed in the infrared LEDs 111a to 111c respectively in response to the running condition of the driver's own car. In particular, while the driver's own car is running at a low speed, the frequency that the next vehicle closes in right behind the driver's own car is increased, and a quantity of infrared light reflected from the next vehicle is ready to increase. Therefore, the influence caused due to the next vehicle can be lessened effectively by decreasing largely a quantity of light of the outer infrared LED 111c. On the contrary, while the driver's own car is running at a high speed, in many cases such a possibility is low that the next vehicle comes close to the driver's own car. Also, even in the situation that the next vehicle comes close to the driver's own car at a time of overtaking, or the like, the next vehicle passes by the driver's own car in a moment. Therefore, the necessity of causing a quantity of infrared light of the outer infrared LED 111a to significantly decrease is small. From an aspect that flexibility in distributing the infrared light can be enhanced in this manner, the configuration in Embodiment 3 can make the check of the subject more easily than the configuration in Embodiments 1, 2 in which the transmission limiting filter is employed, and has the advantage in monitoring the subj ect.

In this explanation, the infrared light source is composed of three infrared LEDs.
It is needless to say that the infrared light source may be composed of two or four infrared LEDs or more. Also, in the above explanation, a single lens is employed in the infrared light source. The individual lenses may be provided in response to the infrared LEDs respectively.

In Embodiment 3, in the rightward monitoring module 1R shown in FIG.10A, a different area is illuminated at a different quantity of light by three infrared LEDs 111a to 111c respectively. In this case, the reflection characteristic of the reflector may also be utilized. FIG. 10B shows an example in which a reflector 140 for reflecting the light emitted from the infrared LED 111 ahead of the driver's own car is provided to the infrared light source 110. A reflecting surface of this reflector 140 is shaped asymmetrically with respect to an emitting optical axis of the infrared LED 111 in the lateral direction, and is constructed such that a quantity of reflected light is increased gradually from the rightward area to the leftward area. For example, a center line of a parabola on the reflecting surface of the reflector 140 is displaced rightward from an optical axis of the infrared LED 111, and the reflecting surface is constructed such that a larger quantity of infrared light emitted from the infrared LED 111 is reflected to the backward area in comparison with the rightward area. Because this reflector 140 is provided, a quantity of irradiated light of the infrared light emitted from the infrared light source 110 has the right-upward inclined characteristic from the rightward end A2 toward the backward end A1, as shown in FIG.4C in Embodiment 1. In other words, a quantity of light of the infrared light irradiated to the rightward area is reduced smaller than a quantity of light of the infrared light irradiated to the backward area. It is needless to say that the reflecting surface of the reflector 140 is shaped bilaterally symmetrically in the leftward monitoring module 1 L. In this event, when the reflecting surface of the reflector 140 is shaped stepwise, a quantity of irradiated light can be controlled stepwise from the rightward end A2 to the backward end A1, like the rightward monitoring module 1R in FIG.10A.

### (Embodiment 4)

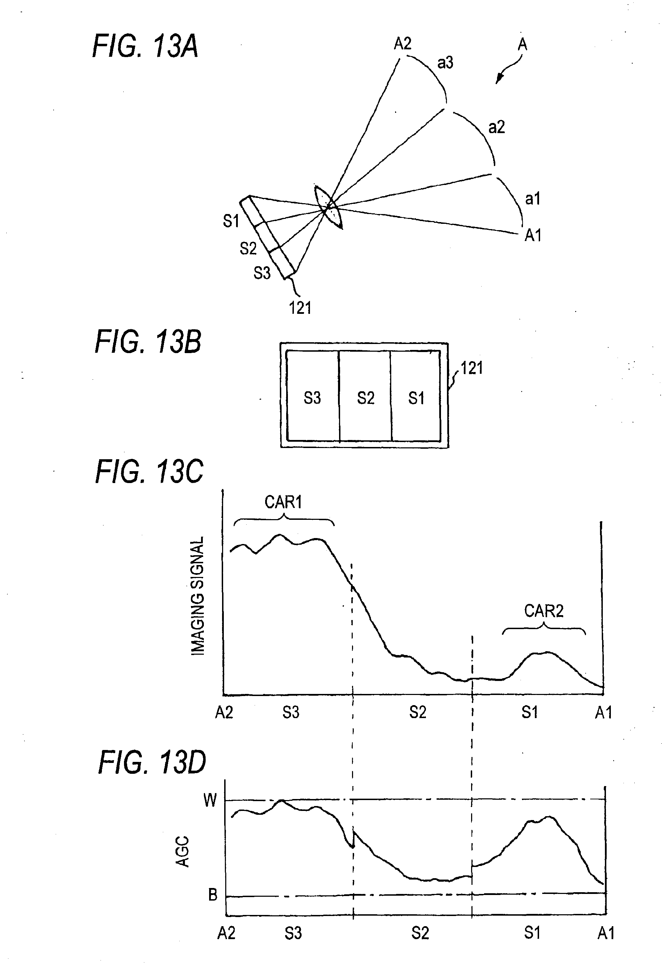

In Embodiment 4, the signal processing unit 2 is enabled to check the following vehicle on the monitor device 3, and the transmission limiting filter in Embodiments 1, 2 and a plurality of infrared LEDs in Embodiment 3 are not provided to the rightward and leftward monitoring modules 1R, 1L. FIGS.13A, 13B are a plan configurative view and a front configurative view showing conceptually the imaging element 121 of the imaging device 120 in the rightward monitoring module 1 R. An imaging surface of the imaging element 121 is constructed, when viewed from the front, such that a rightward pixel area S1 picks up the image of the back area a1 of the driver's own car, a center pixel area S2 picks up the image of the intermediate area a2, and a leftward pixel area S3 picks up the image of the rightward area a3. In the signal processing unit 2 that applies the signal processing to the subject whose image is picked up by the imaging element 121, the AGC is applied independently to the pixel areas S1 to S3 of the imaging element 121 respectively. In other words, the AGC is applied based on the imaging signal at the maximum level in every pixel areas S1 to S3 respectively. In this AGC, it is possible to take such a measure that the AGC may be applied while the signals of the pixel areas S1 to S3 are amplified according to time by an amplifying operation of the amplifying portion 21. Otherwise, independent amplifier circuits may be provided to correspond to the pixel areas S1 to S3 respectively, and then the AGC may be applied in respective amplifier circuits.

In Embodiment 4, as shown in FIG.13C, when the next vehicle CAR1 is located, the image of the next vehicle CAR1 is picked up by the leftward pixel area S3. In this case, even when the signal level of the imaging signal of the next vehicle is high on account of the reflection of the infrared light caused by the next vehicle, the signal level is decreased to the predetermined level by the AGC. An extent of level decrease of the signal level is increased inevitably in this AGC. Meanwhile, the image of the following vehicle CAR2 is picked up by the rightward pixel area S1 of the imaging element 121. In this case, since the signal level of the imaging signal of the following vehicle CAR2 is low, this imaging signal is amplified up to the predetermined level by the AGC. Accordingly, as shown in FIG.13D, both the imaging signals of the next vehicle CAR1 and the following vehicle CAR2 are controlled at the substantially same signal level. As a result, the driver can check both the next vehicle CAR1 and the following vehicle CAR2 without fail on the monitor device 3. Also, even when the images of another vehicle and the obstruction are picked up by the center area a2, the appropriate AGC is applied in answer to the signal level of the imaging signal. As a result, the driver can check these subjects without fail on the monitor device 3.

In Embodiment 4, merely the change of the configuration of the signal processing unit 2 is needed, but there is no need to change particularly the configuration of the infrared light source 110 and the imaging device 120, for example. Therefore, when the monitoring module of this type already exists, the existing monitoring module can be utilized as it is. As a result, Embodiment 4 has the advantage in reducing a cost.

In Embodiment 4, the imaging area of the imaging element 121 is partitioned into three areas. But the imaging area may be partitioned into two areas or four areas or more. Also, when the processing capability of the signal processing unit 2 is large, the AGC can be applied in unit of pixel. Like Embodiment 4, the AGC is not applied uniformly over the whole surface of the imaging element 121, but the independent AGCs are applied to respective areas. As a result, the signal processing that can deal with a change in traffic situation in the surrounding area from the sideward area to the backward area of the driver's own car in real time is made possible, and such a situation is realized that the driver can monitor the subject without fail on the monitor device.

Also, in the above explanation, the imaging element 121 is constructed such that the AGCs in three areas are applied simply independently. But the AGC factors in respective areas may be set differently. For example, the AGC factor of the imaging signal of the image being picked up in the leftward pixel area may be set low, the AGC factor of the imaging signal of the image being picked up in the center pixel area may be set slightly highly, and the AGC factor of the imaging signal of the image being picked up in the rightward pixel area may be set further highly. The AGC factor mentioned herein corresponds an extent of AGC, i.e., an amplification degree in the amplifying portion, in other words, a magnitude of gain. Accordingly, all the next vehicle and the following vehicle are not displayed on the monitor device in the same brightness, but the following vehicle may be displayed on the monitor device as the brighter image than that of as the next vehicle.

In Embodiments 1 to 4, for the purpose of monitoring the area from the sideward area to the backward area of the driver's own car, the monitoring module of the monitoring system of the present invention is built in the rear combination lamp. But the present invention is not limited to this mode. The monitoring module of the monitoring system may be built in the high-mounted stop lamp or the license plate like Patent Literature 1. Also, in order to monitor the sideward area on the passenger seat side of the driver's own car, the monitoring module of the monitoring system may be built in the side mirror or the headlamp, for example. In this manner, when the locations in which the monitoring module is built are different, it is important that the transmittance of the transmission limiting filter in Embodiments 1, 2, the segments of the irradiating areas of the infrared LEDs in Embodiment 3, and the like should be designed adequately in response to the irradiation range of the infrared light emitted from the infrared light source and the imaging area of the imaging device. In Embodiment 4, it is important that the partition areas of the imaging element should be set adequately.

In Embodiments 1 to 4, the example in which the illumination and the image pickup of the subject are performed by utilizing the infrared light is illustrated. The present invention can be similarly applied to any monitoring system if this monitoring system is constructed such that the subject is illuminated by irradiating the light, then the imaging signal of the illuminated subject is detected by receiving the light, and then the image is obtained by applying the AGC to the resultant imaging signal. For example, the present invention can also be applied to the monitoring system that utilizes the visible light.

The present invention can be employed in the vehicle monitoring system in which the vehicle is monitored by picking up the image of the surrounding area of the vehicle, and then displaying the resultant image on the monitor device.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A vehicle monitoring controlling unit comprising:
a signal processing unit (2) configured to apply a signal processing of an automatic gain control to an imaging signal of a pick-up image obtained from an imaging device (120) and to cause a monitor device (3) to display an image obtained from the imaging signal that is subjected to the signal processing by the signal processing unit (2),
**characterized in that** the signal processing unit (2) is configured to output the imaging signal which is adjusted with respect to each of areas in an imaging area to the monitor device (3).

2. A vehicle monitoring system comprising:
a light source (110) configured to emit a light to irradiate the light onto a certain range;
an imaging device (120) configured to pick up an image of a subject that is illuminated by the light emitted from the light source (110);
the vehicle monitoring controlling unit according to claim 1;
a monitor device (3) configured to display the image obtained from the imaging signal that is subjected to the signal processing by the signal processing unit (2); and
a filter (130) provided on either an irradiating path of the light that is emitted from the light source (110) or an incident path of the light that is received by the imaging device (120), and having an optical transmission characteristic whose transmittance of light is set differently with respect to each of areas in the certain range.

3. A vehicle monitoring system according to claim 2, wherein the optical transmission characteristic of the filter (130) includes a characteristic whose transmittance of light with respect to each of the areas is changed successively or a characteristic whose transmittance of light with respect to each of the areas is changed stepwise.

4. A vehicle monitoring system comprising:
a light source (110) configured to emit a light to irradiate the light onto a certain range;
an imaging device (120) configured to pick up an image of a subject that is illuminated by the light emitted from the light source (110);
the vehicle monitoring controlling unit according to claim 1; and
a monitor device (3) configured to display the image obtained from the imaging signal that is subjected to the signal processing by the signal processing unit (2);
wherein the light source (110) is configured to irradiate the light onto different areas in the certain range with a different luminous intensity respectively.

5. A vehicle monitoring system comprising:
a light source (110) configured to emit a light to irradiate the light onto a certain range;
an imaging device (120) configured to pick up an image of a subject that is illuminated by the light emitted from the light source (110);
the vehicle monitoring controlling unit according to claim 1; and
a monitor device (3) configured to display the image obtained from the imaging signal that is subjected to the signal processing by the signal processing unit (2);
wherein the signal processing unit (2) is configured to partition the imaging area of the imaging device (120) into a plurality of the areas and apply independently the automatic gain control with respect to the imaging signal for each of the areas.

6. A vehicle monitoring system according to any one of claims 2 to 5, wherein the light source (110) is an infrared light source that emits an infrared light, and the imaging device (120) has a semiconductor infrared imaging device that picks up the image by receiving the infrared light.
